(19) **Europäisches Patentamt / European Patent Office / Office européen des brevets**

(11) **EP 4 708 076 A1**

(12) **EUROPEAN PATENT APPLICATION**

(43) Date of publication:
**11.03.2026   Bulletin 2026/11**

(21) Application number: **24198905.2**

(22) Date of filing: **06.09.2024**

(51) International Patent Classification (IPC):
**G06F 16/45** *(2019.01)*

(52) Cooperative Patent Classification (CPC):
**G06F 16/45**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Sakmann, Kaspar**
  **70469 Stuttgart (DE)**
• **Metzen, Jan Hendrik**
  **71034 Boeblingen (DE)**
• **Zhang, Dan**
  **71229 Leonberg (DE)**

Remarks:
Amended claims in accordance with Rule 137(2) EPC.

(54) **DEVICE, DATASTRUCTURE AND COMPUTER IMPLEMENTED METHOD FOR DIGITAL CONTENT PROCESSING**

(57)   A device, a datastructure, and a computer implemented method for digital content processing, wherein the method comprises providing (202) a first dataset, wherein the first dataset comprises elements, providing (204) a second dataset, wherein the second dataset comprises elements, wherein a digital content of a respective element of the elements comprises a digital image, for example a video image, a radar image, a LiDAR image, an ultrasonic image, a motion image, or a thermal image, or wherein a content of a respective element of the elements comprise a digital audio signal, generating (206), in particular with a data-to-text model, a first set of descriptions, wherein the first set comprises an element-wise description of the elements of the first dataset, wherein the description of the respective element of the first dataset is determined depending on the content of the respective element of the first dataset, generating (208), in particular with the data-to-text model, a second set of descriptions, wherein the second set comprises an element-wise description of the elements of the second dataset, wherein the description of the respective element of the second dataset is determined depending on the content of the respective element of the second dataset, determining (210), in particular with a large language model, common concepts in the first dataset that are non-existent in the second dataset or less frequent in the second dataset than in the first dataset, determining (212), in particular with a text-data-similarity metric, for the elements of the first dataset a first plurality of text-data-similarities, wherein the first plurality comprises the element-wise and common concept-wise text-data-similarity of pairs of the content of one element of the first dataset and one common concept, determining (214), in particular with the text-data-similarity metric, for the elements of the second dataset a second plurality of text-data-similarities, wherein the second plurality comprises the element-wise and common concept-wise text-data-similarity of pairs of the content of one element of the second dataset and one common concept, determining (216) for the first plurality common concept-wise the average text-data similarity that is associated with the respective common concept according to the first plurality, determining (218) for the second plurality common concept-wise the average text-data similarity that is associated with the respective common concept according to the second plurality, associating (220) the common concepts common concept-wise with a rank, wherein the rank is determined by the average text-data similarities associated with the common concepts according to the first plurality and by the average text-data similarities associated with the common concepts according to the second plurality, selecting (222) at least one common concept depending on the ranks that are associated with the common concepts, and outputting (224) the selected at least one common concept.

EP 4 708 076 A1

```
┌─────────┐
│   202   │
└─────────┘
     │
     ▼
┌─────────┐
│   204   │
└─────────┘
     │
     ▼
┌─────────┐
│   206   │
└─────────┘
     │
     ▼
┌─────────┐
│   208   │
└─────────┘
     │
     ▼
┌─────────┐
│   210   │
└─────────┘
     │
     ▼
┌─────────┐
│   212   │
└─────────┘
     │
     ▼
┌─────────┐
│   214   │
└─────────┘
     │
     ▼
┌─────────┐
│   216   │
└─────────┘
     │
     ▼
┌─────────┐
│   218   │
└─────────┘
     │
     ▼
┌─────────┐
│   220   │
└─────────┘
     │
     ▼
┌─────────┐
│   222   │
└─────────┘
     │
     ▼
┌─────────┐
│   224   │
└─────────┘
```

## Fig. 2

**Description**

Background

The description relates to a device, a datastructure and a computer implemented method for digital content processing.

In machine learning workflows, understanding differences of two datasets is a crucial problem, for instance: (i) comparing synthetic and real data, (ii) comparing data on which a machine learning model predicts correctly versus incorrectly, (iii) or in understanding the domain shift from a model's training data to data observed after deployment. Ideally, the differences should be described in natural language such that they are interpretable and actionable.

Disclosure of the invention

Multi-modal foundation models are capable of processing data modalities such as digital images or audio signals and to express semantics, e.g., in natural language, for data analysis.

For instance, semantic or geometric properties of a datum, such as a digital image or audio signal, can be expressed in natural language. Large language models are capable of acting on natural language, in particular for performing operations on natural language such as, e.g., summarization.

A computer implemented method for digital content processing, comprises providing a first dataset, wherein the first dataset comprises elements, providing a second dataset, wherein the second dataset comprises elements, wherein a digital content of a respective element of the elements comprises a digital image, for example a video image, a radar image, a LiDAR image, an ultrasonic image, a motion image, or a thermal image, or wherein a content of a respective element of the elements comprise a digital audio signal, generating, in particular with a data-to-text model, a first set of descriptions, wherein the first set comprises an element-wise description of the elements of the first dataset, wherein the description of the respective element of the first dataset is determined depending on the content of the respective element of the first dataset, generating, in particular with the data-to-text model, a second set of descriptions, wherein the second set comprises an element-wise description of the elements of the second dataset, wherein the description of the respective element of the second dataset is determined depending on the content of the respective element of the second dataset, determining, in particular with a large language model, common concepts in the first dataset that are nonexistent in the second dataset or less frequent in the second dataset than in the first dataset, determining, in particular with a text-data-similarity metric, for the elements of the first dataset a first plurality of text-data-similarities, wherein the first plurality comprises the element-wise and common concept-wise text-data-similarity of pairs of the content of one element of the first dataset and one common concept, determining, in particular with the text-data-similarity metric, for the elements of the second dataset a second plurality of text-data-similarities, wherein the second plurality comprises the element-wise and common concept-wise text-data-similarity of pairs of the content of one element of the second dataset and one common concept, determining for the first plurality common concept-wise the average text-data similarity that is associated with the respective common concept according to the first plurality, determining for the second plurality common concept-wise the average text-data similarity that is associated with the respective common concept according to the second plurality, associating the common concepts common concept-wise with a rank, wherein the rank is determined by the average text-data similarities associated with the common concepts according to the first plurality and by the average text-data similarities associated with the common concepts according to the second plurality, selecting at least one common concept depending on the ranks that are associated with the common concepts, and outputting the selected at least one common concept.

The common concepts are text, in particular a natural language text, that provides a hypothesis about the differences between the first dataset and the second dataset. The text-data-similarity compares the similarity of the content of a respective element, i.e., the digital image or audio signal, with the text of the respective common concept. The text-data-similarity quantifies to which extent the content of the element in the pair supports the evidence for the hypothesis provided by the common concept in the pair regarding difference between the first dataset and the second dataset.

The hypothesis can be used to detect anomalies in a technical system by computing differences between a set of recent measurement on which a model makes mistakes (the first dataset) to a reference correctly classified dataset (the second dataset). The first dataset can be seen as the anomalous or rare data, and the at least one common concept allows explaining the core properties of the difference, i.e., the anomaly.

Determining the rank may comprise ranking a common concept that has a higher average text-data similarity in the first plurality higher than a common concept that has a lower text-data similarity according to the first plurality.

Determining the rank may comprise ranking a common concept that has a lower average text-data similarity in the second plurality higher than a common concept that has a higher text-data similarity according to the second plurality.

The method may comprise capturing the content of the elements with a sensor, in particular capturing the digital image with a camera, capturing the video image with a camera, capturing the radar image with a radar sensor, capturing the LiDAR image with a LiDAR sensor, capturing the ultrasonic image with an ultrasound sensor, capturing the motion image with a motion sensor, or capturing the thermal image with a thermal image sensor, or capturing the audio signal with a microphone.

In particular for comparing synthetically generated data with real-world data, the content of the elements of the first dataset is synthetically generated content, and the content of the elements of the second dataset is content captured with a sensor in the real-world.

The method may comprise sending the at least one common concept to at least one technical system, in particular a test bench or a vehicle or a robot, for selecting captured content depending on the at least one common concept. The method interacts with the technical system for example in the following way: The technical system collects data on which a model produces undesired behavior, e.g. misclassifications, and data on which the model behaves normally. The method explains the differences. Based on this explanation, novel data can be collected from data collected by the technical system such that it covers the problematic condition better.

The method may comprise receiving the content of the elements of the first dataset and/or the second dataset from at least one technical system, in particular a test bench or a vehicle or a robot. For instance, the textual description in the at least one common concept can be sent to a fleet of vehicles that apply a CLIP-based retrieval filter to select appropriate data matching the textual description. Based on this collected data, the model can be retrained.

A device for digital content processing comprises at least one processor, at least one memory, wherein the at least one memory comprises instructions that are executable by the at least one processor and that, when executed by the at least one processor cause the device to execute the method.

A computer program may be provided, wherein the computer program comprises computer readable instructions that, when executed by the computer, cause the computer to execute the method.

A datastructure may be provided, wherein the datastructure comprises at least one data field for a first dataset, wherein the first dataset comprises elements, the datastructure comprises at least one data field for a second dataset, wherein the second dataset comprises elements, wherein a digital content of a respective element of the elements comprises a digital image, for example a video image, a radar image, a LiDAR image, an ultrasonic image, a motion image, or a thermal image, or wherein a content of a respective element of the elements comprise a digital audio signal, wherein the datastructure comprises at least one data field for a first set of descriptions, generated, in particular with a data-to-text model, wherein the first set comprises an element-wise description of the elements of the first dataset, wherein the description of the respective element of the first dataset is determined depending on the content of the respective element of the first dataset, wherein the datastructure comprises at least one data field for a second set of descriptions generated, in particular with a data-to-text model, wherein the second set comprises an element-wise description of the elements of the second dataset, wherein the description of the respective element of the second dataset is determined depending on the content of the respective element of the second dataset, wherein the datastructure comprises at least one data field for common concepts in the first dataset that are non-existent in the second dataset or less frequent in the second dataset than in the first dataset, in particular common concepts determined with a large language model, wherein the datastructure comprises at least one data field for a first plurality of text-data-similarities determined, in particular with a text-data-similarity metric, for the elements of the first dataset, wherein the first plurality comprises the element-wise and common concept-wise text-data-similarity of pairs of the content of one element of the first dataset and one common concept, wherein the datastructure comprises at least one data field for a second plurality of text-data-similarities determined, in particular with the text-data-similarity metric, for the elements of the second dataset, wherein the second plurality comprises the element-wise and common concept-wise text-data-similarity of pairs of the content of one element of the second dataset and one common concept, wherein the datastructure comprises at least one data field for the average text-data similarity that is associated with the respective common concept according to the first plurality determined for the first plurality common concept-wise, wherein the datastructure comprises at least one data field for the average text-data similarity that is associated with the respective common concept according to the second plurality determined for the second plurality common concept-wise, wherein the datastructure comprises at least one data field for ranks associated with the common concepts common concept-wise, wherein the rank is determined by the average text-data similarities associated with the common concepts according to the first plurality and by the average text-data similarities associated with the common concepts according to the second plurality, wherein the datastructure comprises at least one data field for at least one common concept selected depending on the ranks that are associated with the common concepts.

Further exemplary embodiments are derived from the following description and the drawing. In the drawing

Fig. 1    schematically depicts a device for digital content processing,

Fig. 2    depicts a flowchart comprising steps of a method for digital content processing,

Fig. 3    schematically depicts a datastructure.

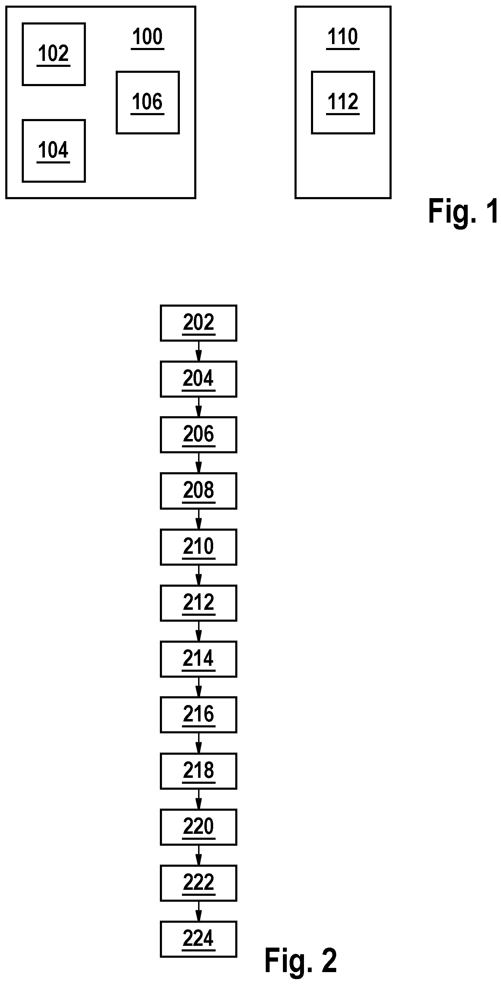

Figure 1 schematically depicts a device 100 for digital content processing. The device 100 comprises at least one processor 102 and at least one memory 104. The device 100 for example comprises an interface 106 to a technical system 110. The interface 106 is configured to receive digital content from the technical system. The interface 106 is configured to send at least one common concept to the technical system 110.

The technical system 110 is for example configured to select digital content depending on the at least one common concept and to send the selected digital content to the interface 106.

The technical system 110 may be a test bench or a vehicle or a robot.

The digital content comprises for example a digital image or a digital audio signal.

The digital image is for example a video image, a radar image, a LiDAR image, an ultrasonic image, a motion image, or a thermal image.

The technical system 110 is for example configured for capturing the content with a sensor 112. The device 100 may comprise the sensor 112 instead of the sensor 112 arranged in the technical system 110.

The sensor 112 comprises for example a camera for capturing the digital image or the video image. The sensor 112 comprises for example a radar sensor for capturing the radar image. The sensor 112 comprises for example a LiDAR sensor for capturing the LiDAR image. The sensor 112 comprises for example an ultrasound sensor for capturing the ultrasonic image. The sensor 112 comprises for example a motion sensor for capturing the motion image. The sensor 112 comprises for example a thermal image sensor for capturing the thermal image. The sensor 112 comprises for example a microphone for capturing the audio signal.

The at least one memory 104 comprises instructions that are executable by the at least one processor 102 and that, when executed by the at least one processor 102 cause the device 100 to execute a method for digital content processing.

Figure 2 depicts a flowchart comprising steps of the method for digital content processing.

The method comprises a step 202.

The step 202 comprises providing a first dataset $D^A = \{x_i^a\}$.

The first dataset comprises $n$ elements $x_i^a$, $i = 1, ..., n$.

The elements $x_i^a$ comprise digital content.

For evaluating real-world content, the content of the elements $x_i^a$ is content captured in the real-world, e.g., by the sensor 112.

The real-world content may be received from the technical system 110 or the sensor 112.

For evaluating synthetically generated content, the content of the elements $x_i^a$ is synthetically generated content. The synthetically generated content may be generated by a generative model.

The method comprises a step 204.

The step 204 comprises providing a second dataset $D^B = \{x_i^b\}$

The second dataset comprises m elements $x_i^b$, $i = 1, ..., m$.

The elements $x_i^b$ comprise digital content.

For evaluating real-world content, the content of the elements $x_i^b$ is content captured in the real-world, e.g., by the sensor 112.

The real-world content may be received from the technical system 110 or the sensor 112.

For evaluating synthetically generated content, the content of the elements $x_i^b$ is synthetically generated content. The synthetically generated content may be generated by the generative model.

The digital content of a respective element of the elements $x_i^a, x_i^b$ comprises for example a respective digital image.

The digital image is for example a video image, a radar image, a LiDAR image, an ultrasonic image, a motion image, or a thermal image.

The method is not limited to processing digital content comprising a digital image. The digital content of a respective element of the elements $x_i^a, x_i^b$ may comprise a digital audio signal.

According to an example, the elements $x_i^a, x_i^b$ comprise the same modality or modalities, i.e., digital image, digital audio signal, or both: digital image and digital audio signal.

The method comprises a step 206.

The step 206 comprises generating a first set of descriptions $C^A = \{c_1^a, ..., c_n^a\}$.

The first set of descriptions $C^A$ is for example determined with a data-to-text model $f$. The data-to-text model $f$ is for example BLIP2 (arXiv:2301.12597) or LLaVa (arXiv:2304.08485).

The first set $C^A$ comprises an element-wise description $c_i^a$, in particular description $c_i^a$, of the elements $x_i^a$ of the first dataset $D^A$. The description $c_i^a$ of the respective element $x_i^a$ of the first dataset $D^A$ is determined depending on the content of the respective element $x_i^a$ of the first dataset $D^A$:

$$c_i^a = f(x_i^a)$$

The method comprises a step 208.

The step 208 comprises generating a second set of descriptions $C^B = \{c_1^b, ..., c_n^b\}$.

The second set of descriptions $C^B$ is for example determined with the data-to-text model $f$.

The second set $C^B$ comprises an element-wise description $c_i^b$, in particular text description $c_i^b$, of the elements $x_i^b$ of the second dataset $D^B$. The description $c_i^b$ of the respective element $x_i^b$ of the second dataset $D^B$ is determined depending on the content of the respective element $x_i^b$ of the second dataset $D^B$:

$$c_i^b = f\left(x_i^b\right)$$

The method comprises a step 210.

The step 210 comprises determining common concepts in the first dataset $D^A$ that are non-existent in the second dataset $D^B$ or less frequent in the second dataset $D^B$ than in the first dataset $D^A$.

The common concepts are for example determined with a large language model, e.g., Mistral-7B (arXiv:2310.06825).

For example, the following steps are repeated N times (j=0,...N-1):

    a. Sample K descriptions from $C^A$ and K descriptions from $C^B$ uniform at random.

    b. Construct a first text prompt based on the samples text descriptions and a prompt template. The prompt template can be for instance:
"Given descriptions for two sets of measurements $D^A$ and $D^B$ as follows:

$$A: c_{i_1}^a \ A: c_{i_2}^a, ..., A: c_{i_K}^a \ B: c_{i_1}^b \ B: c_{i_2}^b, ..., B: c_{i_K}^b$$

Please list common concepts in the descriptions of set $D^A$ that are non-existent or rare in set $D^B$.", where the respective descriptions $c_{i_k}^a$, $c_{i_k}^b$ are inserted.
The method is not limited to this first text prompt. More or less sophisticated prompt templates are possible and compatible.

    c: Provide the first text prompt to the large language model and record the answers of the large language model as $H_j$.

$H_j$ can be interpreted as a list of L hypotheses $h_{j,l}$ regarding the differences of the two sets of measurements:

$$H_j = \left\{h_{j,1}, ..., h_{j,L}\right\}$$

The N lists $H_{j,j=1,...,N-1}$ may be used as common concepts in the first dataset $D^A$ that are non-existent in the second dataset $D^B$ or less frequent in the second dataset $D^B$ than in the first dataset $D^A$.

The N lists $H_{j,j=1,...,N-1}$ may comprise redundancy.

To remove redundancy in the hypotheses, after N times repeating the steps a, b, c, the method may comprise generating a second text prompt as follows:
"The following bullet point list contains relevant concepts that are present in a sets of measurements $D^A$ but not in $D^B$: $\{h_{1,1}, ... , h_{N-1,,L}\}$. Above bullet point list is highly redundant and too fine-grained, and should be made more concise without losing diversity of covered concepts. Do not make bullet points longer or more detailed - better abstract several concepts into a more general one. Note that redundant entries might be stated slightly different - interpret redundancy as 'semantically similar' concepts. Shorten the list substantially by only keeping a single representative entry for groups of redundant entries. Do not remove any entries that are not well represented by another entry."

The method is not limited to this second text prompt. More or less sophisticated prompts are possible and compatible.

Provide the second text prompt to the large language model and record the answers of the large language model as common concepts $H = \{h_1, ... , h_R\}$ in the first dataset $D^A$ that are non-existent in the second dataset $D^B$ or less frequent in the second dataset $D^B$ than in the first dataset $D^A$.

The method comprises a step 212.

The step 212 comprises determining for the elements $x_i^a$ of the first dataset $D^A$ a first plurality of text-data-similarities, wherein the first plurality comprises the element-wise and common concept-wise text-data-similarity $s_{i,j}^a$ of pairs of the content of one element $x_i^a$ of the first dataset and one common concept $h_j$.

The first plurality of text-data-similarities is for example determined with a text-data-similarity metric.

The common concept $h_j$ and the content of the element $x_i^a$ of a pair are for example mapped in particular with a Contrastive Language-Image Pre-Training (CLIP, arXiv:2103.00020) neural network to respective embeddings in a joint embedding space. The text-data-similarity $s_{i,j}^a$ is for example a cosine similarity of the respective embeddings in the joint embedding space.

The method comprises a step 214.

The step 214 comprises determining for the elements $x_i^b$ of the second dataset $D^B$ a second plurality of text-data-similarities, wherein the second plurality comprises the element-wise and common concept-wise text-data-similarity $s_{i,j}^b$ of pairs of the content of one element $x_i^b$ of the second dataset $D^B$ and one common concept $h_j$.

The second plurality of text-data-similarities is for example determined with the text-data-similarity metric.

The common concept $h_j$ and the content of the element $x_i^b$ of a pair are for example mapped in particular with the CLIP neural network to respective embeddings in the joint embedding space. The text-data-similarity $s_{i,j}^b$ is for example a cosine similarity of the respective embeddings in the joint embedding space.

The method comprises a step 216.

The step 216 comprises determining for the first plurality common concept-wise the average text-data similarity that is associated with the respective common concept according to the first plurality.

The method comprises a step 218.

The step 218 comprises determining for the second plurality common concept-wise the average text-data similarity that is associated with the respective common concept according to the second plurality.

The method comprises a step 220.

The step 220 comprises associating the common concepts common concept-wise with a rank.

The rank is determined by the average text-data similarities associated with the common concepts according to the first plurality and by the average text-data similarities associated with the common concepts according to the second plurality.

Determining the rank may comprise ranking a common concept that has a higher average text-data similarity in the first plurality higher than a common concept that has a lower text-data similarity according to the first plurality

Determining the rank may comprise ranking a common concept that has a lower average text-data similarity in the second plurality higher than a common concept that has a higher text-data similarity according to the second plurality.

The rank is for example determined with a metric R that determines how well hypothesis $h_j$ allows distinguishing measurements from first dataset $D^A$ from those of the second dataset $D^B$, based upon the content of the elements $x_i^a, x_i^b$

For instance, the Area under a ROC-Curve of the elements $x_i^a, x_i^b$ is used as metric R.

The method comprises a step 222.

The step 222 comprises selecting at least one common concept depending on the ranks that are associated with the common concepts.

The method comprises a step 224.

The step 224 comprises outputting the selected at least one common concept.

The step 224 may comprise sending the at least one common concept via the interface 106 to the technical system 110. The technical system 110 may select depending on the at least one common concept digital content captured by the technical system 110 and send the selected digital content to the interface 106. select the appropriate data matching the textual description.

The step 224 may comprise sending the at least one common concept to several technical systems, that are configured as described for the technical system 110.

For instance, the technical systems are vehicles of a fleet of vehicles. The textual description in the at least one common concept is sent to the fleet of vehicles.

The vehicles are configured to apply a CLIP-based retrieval filter to select appropriate digital content matching the textual description and to send the selected digital content to the device 100. The vehicles for example apply the CLIP-based retrieval filter to select the appropriate digital content matching the textual description, and send the selected digital content.

The method may be applied in a training of a model. The model may be trained with the digital content of the elements, e.g. for classification or semantic segmentation.

Additional digital content for the training may be collected by sending the at least one common concept and receiving the selected digital content. Based on this collected digital content, the model may be retrained, e.g., in the step 224.

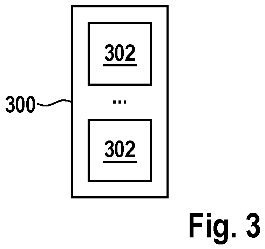

Figure 3 schematically depicts a datastructure 300 for digital content processing.

The datastructure comprises at least one data field 302 for

- a first dataset, wherein the first dataset comprises elements,
- a second dataset, wherein the second dataset comprises elements, wherein a digital content of a respective element of the elements comprises a digital image, for example a video image, a radar image, a LiDAR image, an ultrasonic image, a motion image, or a thermal image, or wherein a content of a respective element of the elements comprise a digital audio signal,
- a first set of descriptions, generated, in particular with a data-to-text model, wherein the first set comprises an element-wise description of the elements of the first dataset, wherein the description of the respective element of the first dataset is determined depending on the content of the respective element of the first dataset,
- a second set of descriptions generated, in particular with a data-to-text model, wherein the second set comprises an element-wise description of the elements of the second dataset, wherein the description of the respective element of the second dataset is determined depending on the content of the respective element of the second dataset,
- common concepts in the first dataset that are non-existent in the second dataset or less frequent in the second dataset than in the first dataset, in particular common concepts determined with a large language model,
- a first plurality of text-data-similarities determined, in particular with a text-data-similarity metric, for the elements of the first dataset, wherein the first plurality comprises the element-wise and common concept-wise text-data-similarity of pairs of the content of one element of the first dataset and one common concept,

- a second plurality of text-data-similarities determined, in particular with the text-data-similarity metric, for the elements of the second dataset, wherein the second plurality comprises the element-wise and common concept-wise text-data-similarity of pairs of the content of one element of the second dataset and one common concept,

- the average text-data similarity that is associated with the respective common concept according to the first plurality determined for the first plurality common concept-wise,

- the average text-data similarity that is associated with the respective common concept according to the second plurality determined for the second plurality common concept-wise,

- ranks associated with the common concepts common concept-wise, wherein the rank is determined by the average text-data similarities associated with the common concepts according to the first plurality and by the average text-data similarities associated with the common concepts according to the second plurality,

- at least one common concept selected depending on the ranks that are associated with the common concepts.

**Claims**

1. Computer implemented method for digital content processing, **characterized in that** the method comprises

providing (202) a first dataset, wherein the first dataset comprises elements, providing (204) a second dataset, wherein the second dataset comprises elements, wherein a digital content of a respective element of the elements comprises a digital image, for example a video image, a radar image, a LiDAR image, an ultrasonic image, a motion image, or a thermal image, or wherein a content of a respective element of the elements comprise a digital audio signal,
generating (206), in particular with a data-to-text model, a first set of descriptions, wherein the first set comprises an element-wise description of the elements of the first dataset, wherein the description of the respective element of the first dataset is determined depending on the content of the respective element of the first dataset,
generating (208), in particular with the data-to-text model, a second set of descriptions, wherein the second set comprises an element-wise description of the elements of the second dataset, wherein the description of the respective element of the second dataset is determined depending on the content of the respective element of the second dataset,
determining (210), in particular with a large language model, common concepts in the first dataset that are non-existent in the second dataset or less frequent in the second dataset than in the first dataset,
determining (212), in particular with a text-data-similarity metric, for the elements of the first dataset a first plurality of text-data-similarities, wherein the first plurality comprises the element-wise and common concept-wise text-data-similarity of pairs of the content of one element of the first dataset and one common concept,
determining (214), in particular with the text-data-similarity metric, for the elements of the second dataset a second plurality of text-data-similarities, wherein the second plurality comprises the element-wise and common concept-wise text-data-similarity of pairs of the content of one element of the second dataset and one common concept,
determining (216) for the first plurality common concept-wise the average text-data similarity that is associated with the respective common concept according to the first plurality,
determining (218) for the second plurality common concept-wise the average text-data similarity that is associated with the respective common concept according to the second plurality,
associating (220) the common concepts common concept-wise with a rank, wherein the rank is determined by the average text-data similarities associated with the common concepts according to the first plurality and by the average text-data similarities associated with the common concepts according to the second plurality,
selecting (222) at least one common concept depending on the ranks that are associated with the common concepts, and
outputting (224) the selected at least one common concept.

2. The method according to claim 1, **characterized in that** determining (220) the rank comprises ranking a common concept that has a higher average text-data similarity in the first plurality higher than a common concept that has a lower text-data similarity according to the first plurality.

3. The method according to one of the preceding claims, **characterized in that** determining (220) the rank comprises ranking a common concept that has a lower average text-data similarity in the second plurality higher than a common concept that has a higher text-data similarity according to the second plurality.

4. The method according to one of the preceding claims, **characterized in that** the method comprises capturing (202) the content of the elements with a sensor, in particular capturing the digital image with a camera, capturing the video image with a camera, capturing the radar image with a radar sensor, capturing the LiDAR image with a LiDAR sensor, capturing the ultrasonic image with a ultrasound sensor, capturing the motion image with a motion sensor, or capturing the thermal image with a thermal image sensor, or capturing the audio signal with a microphone.

5. The method according to one of the preceding claims, **characterized in that** the content of the elements of the first dataset is synthetically generated (202) content, and the content of the elements of the second dataset is content captured (204) with a sensor in the real-world.

6. The method according to one of the preceding claims, **characterized in that** the method comprises sending (224) the at least one common concept to at least one technical system, in particular a test bench or a vehicle or a robot, for selecting captured content depending on the at least one common concept.

7. The method according to one of the preceding claims, **characterized in that** the method comprises receiving (202) the content of the elements of the first dataset and/or the second dataset from at least one technical system (110), in particular a test bench or a vehicle or a robot.

8. A device (100) for digital content processing, **characterized in that** the device (100) comprises at least one processor (102), at least one memory (104), wherein the at least one memory (104) comprises instructions that are executable by the at least one processor (102) and that, when executed by the at least one processor (102) cause the device (100) to execute the method according to one of the preceding claims.

9. Computer program, **characterized in that** the computer program comprises computer readable instructions that, when executed by the computer, cause the computer to execute the method according to one of the claims 1 to 7.

10. Datastructure (300), **characterized in that** the datastructure (300) comprises at least one data field (302) for a first dataset, wherein the first dataset comprises elements,

the datastructure (300) comprises at least one data field (302) for a second dataset, wherein the second dataset comprises elements, wherein a digital content of a respective element of the elements comprises a digital image, for example a video image, a radar image, a LiDAR image, an ultrasonic image, a motion image, or a thermal image, or wherein a content of a respective element of the elements comprise a digital audio signal,
wherein the datastructure (300) comprises at least one data field (302) for a first set of descriptions, generated, in particular with a data-to-text model, wherein the first set comprises an element-wise description of the elements of the first dataset, wherein the description of the respective element of the first dataset is determined depending on the content of the respective element of the first dataset,
wherein the datastructure (300) comprises at least one data field (302) for a second set of descriptions generated, in particular with a data-to-text model, wherein the second set comprises an element-wise description of the elements of the second dataset, wherein the description of the respective element of the second dataset is determined depending on the content of the respective element of the second dataset,
wherein the datastructure (300) comprises at least one data field (302) for common concepts in the first dataset that are non-existent in the second dataset or less frequent in the second dataset than in the first dataset, in particular common concepts determined with a large language model, wherein the datastructure (300) comprises at least one data field (302) for a first plurality of text-data-similarities determined, in particular with a text-data-similarity metric, for the elements of the first dataset, wherein the first plurality comprises the element-wise and common concept-wise text-data-similarity of pairs of the content of one element of the first dataset and one common concept,
wherein the datastructure (300) comprises at least one data field (302) for a second plurality of text-data-similarities determined, in particular with the text-data-similarity metric, for the elements of the second dataset, wherein the second plurality comprises the element-wise and common concept-wise text-data-similarity of pairs of the content of one element of the second dataset and one common concept,
wherein the datastructure (300) comprises at least one data field (302) for the average text-data similarity that is associated with the respective common concept according to the first plurality determined for the first plurality common concept-wise,

wherein the datastructure (300) comprises at least one data field (302) for the average text-data similarity that is associated with the respective common concept according to the second plurality determined for the second plurality common concept-wise,

wherein the datastructure (300) comprises at least one data field (302) for ranks associated with the common concepts common concept-wise, wherein the rank is determined by the average text-data similarities associated with the common concepts according to the first plurality and by the average text-data similarities associated with the common concepts according to the second plurality,

wherein the datastructure (300) comprises at least one data field (302) for at least one common concept selected depending on the ranks that are associated with the common concepts.

**Amended claims in accordance with Rule 137(2) EPC.**

1. Computer implemented method for digital content processing, **characterized in that** the method comprises

   providing (202) a first dataset, wherein the first dataset comprises elements, providing (204) a second dataset, wherein the second dataset comprises elements, wherein a digital content of a respective element of the elements comprises a digital image, for example a video image, a radar image, a LiDAR image, an ultrasonic image, a motion image, or a thermal image, or wherein a content of a respective element of the elements comprises a digital audio signal, wherein providing the datasets comprises capturing (202) the content of the elements with a sensor, in particular capturing the digital image with a camera, capturing the video image with a camera, capturing the radar image with a radar sensor, capturing the LiDAR image with a LiDAR sensor, capturing the ultrasonic image with a ultrasound sensor, capturing the motion image with a motion sensor, or capturing the thermal image with a thermal image sensor, or capturing the audio signal with a microphone,

   generating (206), in particular with a data-to-text model, a first set of descriptions, wherein the first set comprises an element-wise description of the elements of the first dataset, wherein the description of the respective element of the first dataset is determined depending on the content of the respective element of the first dataset,

   generating (208), in particular with the data-to-text model, a second set of descriptions, wherein the second set comprises an element-wise description of the elements of the second dataset, wherein the description of the respective element of the second dataset is determined depending on the content of the respective element of the second dataset,

   determining (210), in particular with a large language model, common concepts in the first dataset that are non-existent in the second dataset or less frequent in the second dataset than in the first dataset,

   determining (212), in particular with a text-data-similarity metric, for the elements of the first dataset a first plurality of text-data-similarities, wherein the first plurality comprises the element-wise and common concept-wise text-data-similarity of pairs of the content of one element of the first dataset and one common concept,

   determining (214), in particular with the text-data-similarity metric, for the elements of the second dataset a second plurality of text-data-similarities, wherein the second plurality comprises the element-wise and common concept-wise text-data-similarity of pairs of the content of one element of the second dataset and one common concept,

   determining (216) for the first plurality common concept-wise the average text-data similarity that is associated with the respective common concept according to the first plurality,

   determining (218) for the second plurality common concept-wise the average text-data similarity that is associated with the respective common concept according to the second plurality,

   associating (220) the common concepts common concept-wise with a rank, wherein the rank is determined by the average text-data similarities associated with the common concepts according to the first plurality and by the average text-data similarities associated with the common concepts according to the second plurality,

   selecting (222) at least one common concept depending on the ranks that are associated with the common concepts, and

   outputting (224) the selected at least one common concept.

2. The method according to claim 1, **characterized in that** determining (220) the rank comprises ranking a common concept that has a higher average text-data similarity in the first plurality higher than a common concept that has a lower text-data similarity according to the first plurality.

3. The method according to one of the preceding claims, **characterized in that** determining (220) the rank comprises ranking a common concept that has a lower average text-data similarity in the second plurality higher than a common concept that has a higher text-data similarity according to the second plurality.

4. The method according to one of the preceding claims, **characterized in that** the content of the elements of the first dataset is synthetically generated (202) content, and the content of the elements of the second dataset is content captured (204) with a sensor in the real world.

5. The method according to one of the preceding claims, **characterized in that** the method comprises sending (224) the at least one common concept to at least one technical system, in particular a test bench or a vehicle or a robot, for selecting captured content depending on the at least one common concept.

6. The method according to one of the preceding claims, **characterized in that** the method comprises receiving (202) the content of the elements of the first dataset and/or the second dataset from at least one technical system (110), in particular a test bench or a vehicle or a robot.

7. A device (100) for digital content processing, **characterized in that** the device (100) comprises at least one processor (102), at least one memory (104), wherein the at least one memory (104) comprises instructions that are executable by the at least one processor (102) and that, when executed by the at least one processor (102) cause the device (100) to execute the method according to one of the preceding claims.

8. Computer program, **characterized in that** the computer program comprises computer readable instructions that, when executed by the computer, cause the computer to execute the method according to one of the claims 1 to 6.

9. Datastructure (300), **characterized in that** the datastructure (300) comprises at least one data field (302) for a first dataset, wherein the first dataset comprises elements,

the datastructure (300) comprises at least one data field (302) for a second dataset, wherein the second dataset comprises elements, wherein a digital content of a respective element of the elements comprises a digital image, for example a video image, a radar image, a LiDAR image, an ultrasonic image, a motion image, or a thermal image, or wherein a content of a respective element of the elements comprise a digital audio signal,

wherein the datastructure (300) comprises at least one data field (302) for a first set of descriptions, generated, in particular with a data-to-text model, wherein the first set comprises an element-wise description of the elements of the first dataset, wherein the description of the respective element of the first dataset is determined depending on the content of the respective element of the first dataset,

wherein the datastructure (300) comprises at least one data field (302) for a second set of descriptions generated, in particular with a data-to-text model, wherein the second set comprises an element-wise description of the elements of the second dataset, wherein the description of the respective element of the second dataset is determined depending on the content of the respective element of the second dataset,

wherein the datastructure (300) comprises at least one data field (302) for common concepts in the first dataset that are non-existent in the second dataset or less frequent in the second dataset than in the first dataset, in particular common concepts determined with a large language model,

wherein the datastructure (300) comprises at least one data field (302) for a first plurality of text-data-similarities determined, in particular with a text-data-similarity metric, for the elements of the first dataset, wherein the first plurality comprises the element-wise and common concept-wise text-data-similarity of pairs of the content of one element of the first dataset and one common concept,

wherein the datastructure (300) comprises at least one data field (302) for a second plurality of text-data-similarities determined, in particular with the text-data-similarity metric, for the elements of the second dataset, wherein the second plurality comprises the element-wise and common concept-wise text-data-similarity of pairs of the content of one element of the second dataset and one common concept,

wherein the datastructure (300) comprises at least one data field (302) for the average text-data similarity that is associated with the respective common concept according to the first plurality determined for the first plurality common concept-wise,

wherein the datastructure (300) comprises at least one data field (302) for the average text-data similarity that is associated with the respective common concept according to the second plurality determined for the second plurality common concept-wise,

wherein the datastructure (300) comprises at least one data field (302) for ranks associated with the common concepts common concept-

**EP 4 708 076 A1**

wise, wherein the rank is determined by the average text-data similarities associated with the common concepts according to the first plurality and by the average text-data similarities associated with the common concepts according to the second plurality, wherein the datastructure (300) comprises at least one data field (302) for at least one common concept selected depending on the ranks that are associated with the common concepts.

Fig. 1

Fig. 2

300 — 302 ... 302

Fig. 3

Europäisches
Patentamt

European
Patent Office

Office européen
des brevets

# EUROPEAN SEARCH REPORT

**Application Number**

EP 24 19 8905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ren Xuan ET AL: "You Can Generate It Again: Data-to-text Generation with Verification and Correction Prompting", , 28 June 2023 (2023-06-28), XP093246675, Retrieved from the Internet: URL:https://arxiv.org/pdf/2306.15933 * section 1, 1 * ----- | 1-10 | INV. G06F16/45 |

**TECHNICAL FIELDS SEARCHED (IPC)**

G06F

The present search report has been drawn up for all claims

| Place of search | Date of completion of the search | Examiner |
|---|---|---|
| The Hague | 10 February 2025 | Correia Martins, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    ...........................................................................
& : member of the same patent family, corresponding
    document

EPO FORM 1503 03.82 (P04C01)